# EUROPÄISCHE PATENTSCHRIFT

(11) **EP 3 586 525 B1**
(45) Veröffentlichungstag und Bekanntmachung des Hinweises auf die Patenterteilung: **06.10.2021**
(21) Anmeldenummer: 18703569.6
(22) Anmeldetag: 05.02.2018
(51) Int. Cl.: H04R 25/00, H04R 27/02

(54) **VERFAHREN ZUR BESCHALLUNG VON PERSONEN BEI EINER BESPRECHUNG SOWIE SYSTEM ZUR DURCHFÜHRUNG DES VERFAHRENS**
METHOD FOR EXPOSING PERSONS TO SOUND DURING A CONVERSATION AND SYSTEM FOR PERFORMING THE METHOD
PROCÉDÉ DE SONORISATION DES PERSONNES PENDANT UNE CONVERSATION ET SYSTÈME POUR EXÉCUTER LE PROCÉDÉ

(30) Priorität: 23.02.2017 CH 2092017
(43) Veröffentlichungstag der Anmeldung: 01.01.2020
(73) Patentinhaber: Sonova AG, 8712 Stäfa (CH)
(72) Erfinder: RÖCK, Hans-Ueli, 8634 Hombrechtikon (CH); MEIER, Hilmar, 8008 Zürich (CH); KRUEGER, Harald, 8910 Affoltern am Albis (CH); FEILNER, Manuela, 8132 Egg (CH)
(74) Vertreter: Qip Patentanwälte Dr. Kuehn & Partner mbB
(86) Internationale Anmeldenummer: PCT/EP2018/052764
(87) Internationale Veröffentlichungsnummer: WO 2018/153642

(56) Entgegenhaltungen:
- EP-A1- 3 038 383
- US-A1- 2012 252 411
- US-A1- 2016 150 575

## Beschreibung

### Technisches Gebiet

Die Erfindung betrifft das Gebiet der Hörgeräte. Insbesondere betrifft sie ein Verfahren zur Beschallung von Personen mit mobilen Hörsystemen bei einer Besprechung. Ferner betrifft die Erfindung ein Beschallungssystem zur Durchführung des Verfahrens.

### Stand der Technik

Mobile Hörsysteme sind Systeme, die von Individuen getragen werden und die ihnen beim Hören behilflich sind. Sie können insbesondere ein oder zwei Hörgeräte aufweisen. Hörgeräte sind Geräte, welche dazu dienen den Hörverlust eines Schwerhörigen zu kompensieren und sein Hören zu verbessern. Sie bestehen im Wesentlichen aus einem Mikrofon, einem Verstärker und einem sogenannten Hörer (Lautsprecher) und werden an einem oder beiden Ohren des schwerhörigen Menschen getragen.

Es ist bekannt bei Verkaufs-, Beratungs- und/oder Amtsstellen eine spezielle Beschallung für Schwerhörige vorzusehen. So kann zum Beispiel eine induktive Höranlage vorgesehen sein, welche Schall drahtlos an Hörgeräte überträgt.

Bei den folgenden Patentliteraturangaben wird der Einfachheit halber das "et al." jeweils weggelassen.

Die US 2016 / 150575 von Andersen offenbart eine Punkt-zu-Punkt Sprachübertragung. Die Benutzerschnittstelle zeigt Bilder der Benutzer des Systems.

Die US 2003 / 165239 von Banz offenbart eine Beschallung von ausgewählten Personen. Die Schalldaten werden verschlüsselt an Hörgeräte übertragen, so dass nur Besitzer des Schlüssels zuhören können.

Die WO 2007 / 046748 A1 von Pansell offenbart eine verschlüsselte Schallübertragung für schwerhörige Menschen.

Die WO 2015 / 001135 von El-Hoiydi offenbart ein Broadcast-System, bei dem nur mit einem Stream Access Code zugehört werden kann.

Die EP 2 866 470 A1 von Pedersen offenbart ein Streaming zwischen einem POS (Point of Sale) und einem Hörgerät.

Die EP 3 021 545 A1 von Pedersen offenbart Broadcast-Nachrichten mit Vorkehrungen, die es erlauben ihre Authentizität zu prüfen.

Die DE 10 2007 053832 A1 von Kiepfer offenbart den Einsatz einer Kamera bei der Hörgerätauswahl. Der Kunde kann sehen wie ein zukünftiges Hörgerät an seinem Kopf aussieht.

### Darstellung der Erfindung

Es ist die der Erfindung zugrundeliegende technische Aufgabe, ein Verfahren zur Beschallung von Personen zu schaffen, welches die Privatsphäre der einzelnen Personen schützt und zugleich benutzerfreundlich ist.

Diese Aufgabe wird durch den Gegenstand der unabhängigen Ansprüche gelöst. Weitere Ausführungsformen der Erfindung ergeben sich aus den abhängigen Ansprüchen und aus der folgenden Beschreibung.

Ein Aspekt der Erfindung betrifft ein Verfahren zur Beschallung von Personen mit mobilen Hörsystemen bei einer Besprechung mit einem Sprecher und mit einem audiovisuellen System, das audiovisuelle System aufweisend einen Computer, einen Bildschirm und ein Mikrofon. Das audiovisuelle System kann von dem Sprecher verwendet werden, um mit den Personen zu kommunizieren. Beispielsweise kann die Besprechung in einer Verkaufsstelle, einer Beratungsstelle und/oder einer Amtsstelle erfolgen. Der Sprecher kann ein Bediensteter sein. Die Personen können schwerhörige Personen und/oder schwerhörige Kunden sein.

Jedes der mobilen Hörsysteme kann ein Hörgerät umfassen.

Das audiovisuelle System kann ein stationäres System sein. Der Computer, der Bildschirm und/oder das Mikrofon können mit dem Gebäude, in dem die Besprechung stattfindet verbunden sein. Es ist aber auch möglich, dass das audiovisuelle System tragbar ist.

Gemäss einer Ausführungsform der Erfindung umfasst das Verfahren die Schritte: Empfangen von ersten Daten von einem ersten mobilen Hörsystem, welches vom einer ersten Person getragen wird, wobei die ersten Daten ein Bild der ersten Person referenzieren und/oder beinhalten; Empfangen von zweiten Daten von einem zweiten mobilen Hörsystem, welches vom einer zweiten Person getragen wird, wobei die zweiten Daten ein Bild der zweiten Person referenzieren und/oder beinhalten; und Darstellen des Bildes der ersten Person und des Bildes der zweiten Person auf dem Bildschirm zur Wahrnehmung durch den Sprecher. Die Daten können mit einem Kommunikationsmittel, wie etwa einer drahtlosen Kommunikationsverbindung, beispielsweise über Funk und/oder Infrarot, zwischen den mobilen Hörsystemen und dem audiovisuellem System übertragen werden. Das Bild der ersten Person und das Bild der zweiten Person können Portraitfotos sein. "Referenzieren" kann bedeuten, dass das entsprechende Bild als Bilddaten mit den Daten übertragen wird und/oder dass die Daten eine Kennung enthalten, mit der das Bild später geladen werden kann, beispielsweise aus dem mobilen Hörsystem, dem audiovisuellen System und/oder einem weiteren System.

Gemäss einer Ausführungsform der Erfindung umfasst das Verfahren weiter die Schritte: Auswahl einer Person, d.h. der ersten Person oder der zweiten Person, durch den Sprecher durch Anwählen eines der dargestellten Bilder, d.h. des Bildes der ersten Person oder des Bildes der zweiten Person; Generieren eines Sprachsignals durch Aufnahme einer Sprache des Sprechers mit dem Mikrofon; Drahtloses Übertragen des Sprachsignals an das mobiles Hörsystem der ausgewählten Person; Präsentation des Sprachsignals durch einen Lausprecher des mobilen Hörsystems zur Wahrnehmung durch die ausgewählte Person. Nachdem der Sprecher eine Person ausgewählt hat, wird das von dem Mikrofon aufgenommen Sprachsignal des Sprechers an das mobile Hörsystem der betreffenden Person übertragen und dort abgespielt.

Zusammenfassend präsentiert das audiovisuelle System dem Sprecher Bilder bzw. Portraitfotos der wartenden Personen. Der Sprecher wählt die Person, mit dem er Sprechen will bzw. den er bedienen will. Der Schall seiner Stimme kann dann drahtlos nur an das mobile Hörsystem dieser ausgewählten Personen übertragen werden.

Gemäss der Erfindung werden das Bild der ersten Person und das Bild der zweiten Person zusammen mit je einer Kennung in einer Datenbank gespeichert, auf welche beispielsweise über das Internet zugegriffen wird. Dies kann den Vorteil haben, dass nur die Kennung zwischen dem mobilen Hörsystem und dem audiovisuellem System übertragen werden muss. Das audiovisuelle System kann die Datenbank umfassen und/oder kann die Bilder aus der Datenbank abrufen. Es ist aber auch möglich, dass das Bild der ersten Person in dem mobilen Hörsystem gespeichert ist und/oder das Bild der zweiten Person in dem zweiten mobilen Hörsystem gespeichert ist.

Gemäss der Erfindung enthalten die ersten und die zweiten Daten jeweils eine Kennung, mit welcher das Bild der ersten Person bzw. das Bild der zweiten Person von einer Datenbank abgerufen werden. Die mobilen Hörsysteme müssen lediglich die Kennung an das audiovisuelle System übertragen. Mit dieser Kennung kann das audiovisuelle System das zu der Kennung gehörige Bild aus der Datenbank abrufen.

Gemäss einer Ausführungsform der Erfindung sind die ersten Daten und die zweiten Daten jeweils eine Bluetooth-Kennung oder enthalten eine solche. Dies kann den Vorteil haben, dass kein Bluetooth-Pairing erforderlich ist. Es ist möglich, dass die Bluetooth-Kennung als Kennung der Bilder in der Datenbank verwendet wird.

Gemäss eines Beispiels, das nicht unter den Schutzumfang der Ansprüche fällt wird das Bild der ersten Person im ersten mobilen Hörsystem gespeichert und wird das Bild der zweiten Person im zweiten mobilen Hörsystem gespeichert. Dies kann den Vorteil haben, dass keine Internetverbindung erforderlich ist und/oder die Person im Internet keine Datenspur hinterlassen muss.

Gemäss einer Ausführungsform der Erfindung erfolgt die drahtlose Übertragung des Sprachsignals gemäss eines Bluetooth-Protokolls. Dies kann den Vorteil haben, dass kostengünstige Standardkomponenten verwendet werden können.

Gemäss einer Ausführungsform der Erfindung weist das audiovisuelle System eine Kamera auf. Die Kamera kann den Bereich vor dem Sprecher und/oder den Bereich, in dem sich die Personen befinden, aufnehmen und so ein Kamerabild generieren. Das Kamerabild kann dahingehend analysiert werden, welche Person dem Sprecher gegenüber steht, wobei eine Gesichtserkennung durchgeführt wird. Zur Gesichtserkennung können das Bild der ersten Person und das Bild der zweiten Person verwendet werden. Das Bild der ersten Person und das Bild der zweiten Person können jeweils Portraitfotos sein, die mit dem Kamerabild verglichen werden. Bei der höchsten Übereinstimmung zwischen dem Bild der betreffenden Person und dem Kamerabild kann angenommen werden, dass die betreffende Person vor der Kamera steht.

Gemäss einer Ausführungsform der Erfindung werden Hashwerte des Bildes der ersten Person und des Bildes der zweiten Person zum Vergleich mit dem Kamerabild verwendet. Bei der höchsten Übereinstimmung zwischen dem Hashwert des Bildes der betreffenden Person und dem Hashwert des Kamerabilds kann angenommen werden, dass die betreffende Person vor der Kamera steht.

Zusammenfassend kann das audiovisuelle System eine Kamera aufweisen und es wird eine Gesichtserkennung durchgeführt. Dies kann den Vorteil haben, dass die Aktivierung der Drahtlossprachübertragung für die jeweilige Person automatisch erfolgen kann. Ferner kann erkannt werden, ob der Träger des Hörsystems bzw. die Person auch sein rechtmässiger Besitzer ist.

Gemäss einer Ausführungsform der Erfindung weist das stationäre System ein Personen-Mikrofon auf. Das Mikrofon des Sprechers kann in diesem Fall als Sprecher-Mikrofon aufgefasst werden. Das Personen-Mikrofon kann Schall aus dem Bereich vor dem Sprecher aufnehmen.

Gemäss einer Ausführungsform der Erfindung wird ein Signal eines Personen-Mikrofons dahingehend analysiert, welche Person dem Sprecher gegenüber steht, wobei eine Stimmerkennung durchgeführt wird. Dabei können erste und zweite Sprachaufnahmen der ersten und der zweiten Person zur Stimmerkennung verwendet werden. Diese Sprachaufnahmen und/oder deren Hashwerte können in der Datenbank unter der jeweiligen Kennung gespeichert sein. Bei der höchsten Übereinstimmung zwischen der Sprachaufnahme der Person und dem Signal des Personen-Mikrofons kann angenommen werden, dass die betreffende Person vor dem Personen-Mikrofon steht.

Gemäss einer Ausführungsform der Erfindung werden die Hashwerte der Sprachaufnahmen zur Stimmerkennung verwendet. Bei der höchsten Übereinstimmung zwischen dem Hashwert der Sprachaufnahme der Person und dem Hashwert des Signals des Personen-Mikrofons kann angenommen werden, dass die betreffende Person vor dem Personen-Mikrofon steht.

Zusammenfassend weist das audiovisuelle System ein Personen-Mikrofon auf und es wird eine Stimmerkennung durchgeführt. Dies kann den Vorteil haben, dass die Aktivierung der Drahtlossprachübertragung für die jeweilige Person automatisch erfolgen kann.

Gemäss einer Ausführungsform der Erfindung weist das audiovisuelle System einen Zwischenspeicher für die Bilder der Personen auf. Dies kann den Vorteil haben, dass die Bilder bei einem zweiten Sprechvorgang nicht erst vom Internet oder von den Hörgeräten übertragen werden müssen.

Gemäss einer Ausführungsform der Erfindung umfasst das Verfahren weiter die Schritte: Ermittlung, ob es eine Korrelation einer vorbestimmten minimalen Stärke gibt, zwischen einem Signal eines Mikrofons eines mobilen Hörsystems und einem Signal des Mikrofons des Sprechers; und in Abhängigkeit davon, Präsentation des Signals des Mikrofons durch das mobile Hörsystem. Es wird ermittelt, ob es eine Korrelation zwischen einem Signal eines Mikrofons des mobilen Hörsystems und einem Signal des Mikrofons des Sprechers gibt. Dies eröffnet die Möglichkeit Personen genau dann ein Drahtlossignal zu präsentieren, wenn auch ein Normalhörender die Stimme des Sprechers wahrnehmen würde.

Die Signale der Mikrofone der mobilen Hörsysteme können mit dem Signal des Sprecher-Mikrofons korreliert werden (beispielsweise durch Kreuzkorrelation) und eine Korrelation berechnet werden. Die Korrelation kann ein numerischer Wert sein.

Ein weiterer Aspekt der Erfindung betrifft ein Computerprogramm, das, wenn es auf einem Prozessor durchgeführt wird, dazu ausgeführt ist, das Verfahren, so wie es obenstehend und unterstehend beschrieben ist, durchzuführen. Ein weiterer Aspekt der Erfindung betrifft ein computerlesbares Medium, auf dem ein derartiges Computerprogramm gespeichert ist. Ein computerlesbares Medium kann dabei eine Harddisk, ein USB-Speichergerät, ein RAM, ein ROM, ein EPROM oder ein FLASH-Speicher sein. Ein computerlesbares Medium kann auch ein Datenkommunikationsnetzwerk, wie beispielsweise das Internet, das den Download eines Programmcodes ermöglicht, sein.

Ein weiterer Aspekt der Erfindung betrifft ein Beschallungssystem zur Durchführung des Verfahrens zur Beschallung so wie es obenstehend und untenstehend beschrieben ist. Das Beschallungssystem umfassend das audiovisuelle System, das erste mobile Hörsystem, das zweite mobile Hörsystem und Mittel zur Kommunikation zwischen dem audiovisuellen System und den mobilen Hörsystemen.

### Kurze Beschreibung der Zeichnungen

Fig. 1 zeigt schematisch die Situation bei einer Besprechung einer Verkaufs-, Beratungs- und/oder Amtsstelle mit einem Beschallungssystem gemäss einer Ausführung der Erfindung;
Fig. 2 zeigt ein Blockdiagramm eines Beschallungssystems gemäss einer Ausführung der Erfindung;
Fig. 3 zeigt ein Ablaufdiagramm der erfindungsgemässen Beschallung einer Person.

Die Figuren zeigen lediglich exemplarisch einige mögliche Ausführungsformen. Sie und ihre nun folgende Beschreibung sollen den Schutzumfang der Ansprüche nicht einschränken.

### Wege zur Ausführung der Erfindung und gewerbliche Verwendbarkeit

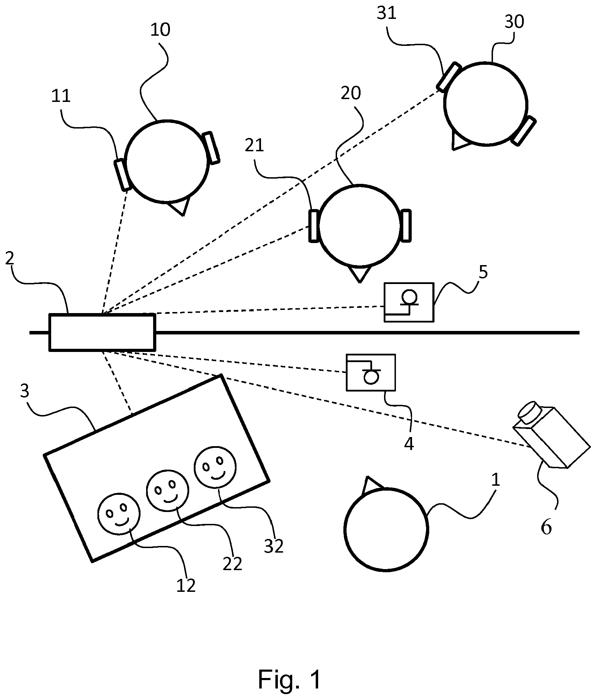

Fig. 1 zeigt schematisch die Situation bei einer Besprechung, in etwa in einer Verkaufs-, Beratungs- und/oder Amtsstelle, im Folgenden als Schalter bezeichnet. Drei Personen 10, 20, 30, beispielsweise schwerhörige Kunden, warten darauf von einem Bediensteten bzw. Sprecher 1 bedient zu werden. Die Personen 10, 20, 30 tragen jeweils ein mobiles Hörsystem 11, 21, 31. Der Schalter ist mit einem audiovisuellen Beschallungssystem ausgerüstet. Dieses umfasst einen Computer 2, einen Bildschirm 3 und ein Sprecher-Mikrofon 4. Optional kann auch eine Personen-Mikrofon 5 sowie eine Personen-Kamera 6 vorgesehen sein. Die Mikrofone 4, 5 und die Kamera 6 können stationär sein. Auf dem Bildschirm 3 werden Bilder, wie etwa Portraitfotos, 12, 22, 32 der Personen 10, 20, 30 angezeigt. Der Sprecher 1 selektiert das Bild 22 der Person 20, mit der er kommunizieren will. Hat er dies getan, so wird der Schall seiner Stimme drahtlos ans Hörsystem 21 der Person übertragen.

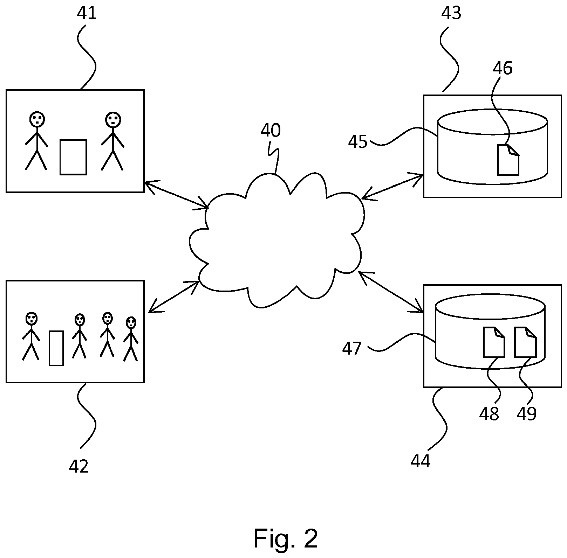

Fig. 2 zeigt ein Blockdiagramm des Beschallungssystems gemäss einer Ausführung der Erfindung. In einem Hörgeräteanpassraum 41 wird ein Bild oder Portraitfoto 46 der Person gemacht. Dieses wird über das Internet 40 an einen Server 43 übertragen und dort in einer Datenbank 45 gespeichert. Wenn der Kunde bei Schalter 42 bedient werden soll, so wird zunächst sein Bild 46 vom Server 43 abgerufen. Es können weitere Server, wie zum Beispiel Server 47, vorgesehen sein, welche ebenfalls Datenbanken, zum Beispiel 47, mit Bildern und/oder Portraitfotos, zum Beispiel 48 und 49, aufweisen.

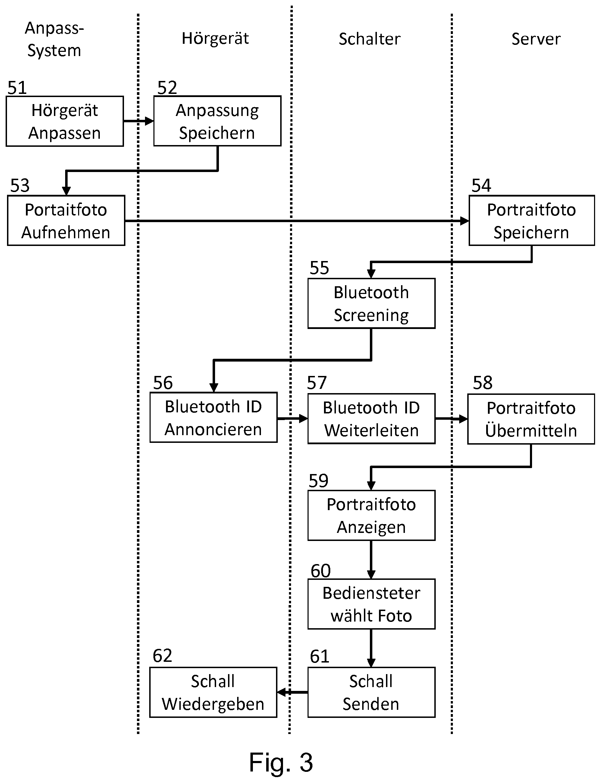

Fig. 3 zeigt ein Ablaufdiagramm eines Verfahrens zur Beschallung einer Person. Es gibt vier "Schwimmbahnen" bzw. ausführende Teilsysteme, nämlich das Anpass-System, das Hörgerät oder Hörsystem, den Schalter und einen Server. In einem ersten Schritt 51 wird ein mobiles Hörsystem an eine Person angepasst, zum Beispiel indem sein Audiogramm gemessen wird und mit einer Anpassformel die frequenz- und laustärkenabhängige Verstärkung eingestellt wird. Die Anpassung wird in Schritt 52 im Hörgerät gespeichert. In der gleichen Sitzung wird auch ein Bild oder Portraitfoto der Person gemacht, Schritt 53. Dieses kann im Hörgerät, Hörsystem und/oder auf einem Server gespeichert werden, Schritt 54. Das audiovisuelle Beschallungssystem eines Schalters führt permanent ein Screening nach Bluetooth-Geräten durch, Schritt 55. Das mobile Hörsystem annonciert periodisch seine Bereitschaft für ein Bluetooth Pairing, Schritt 56. Hierbei kann eine Bluetooth ID ausgesendet werden. Das audiovisuelle Beschallungssystem empfängt in Schritt 57 die Bluetooth ID und leitet sie an den Server weiter. Dieser übermittelt in Schritt 58 das zugehörige Bild oder Portraitfoto. Dieses wird dann auf dem Bildschirm des Schalters zusammen mit den Bildern weiterer Personen angezeigt, Schritt 59. Schritte 51 bis 59 werden für die weiteren Personen analog durchgeführt. Der Sprecher wählt die Person mit der er sprechen will durch Anwahl seines Portraitfotos, Schritt 60. Die Stimme des Sprechers wird daraufhin drahtlos ans Hörgerät des gewählten Personen übertagen, Schritt 61, und dem Personen präsentiert, Schritt 62.

Aufnahme der Bilder bzw. Portraitfotos: Bevorzugt werden die Portraitfotos bei, bzw. direkt vor oder direkt nach, der Hörgeräteerstanpassung aufgenommen. Die Anpasssoftware kann hierfür spezielle Vorkehrungen haben, wie Code für das Ansprechen einer Web-Cam oder Code zur Darstellung eines Bedienelementes zum Auslösen der Aufnahme mit der Web-Cam. Die Web-Cam kann ein separates Bauteil sein, oder, wie im Falle eines Smartphones, im Anpasscomputer eingebaut sein. Bei Verwendung einer separaten Digitalkamera wird das Portraitfoto typischerweise mit einer Speicherkarte oder einem Speicherstick auf den Anpasscomputer übertragen. Die Anpasssoftware kann Code für eine automatische Weiterleitung des Bildes bzw. Portraitfotos an einen Server aufweisen. Die Anpasssoftware kann zur Bedienung durch eine Fachperson und/oder zur Bedienung durch die Person selber ausgestaltet sein. Die Anpasssoftware kann für die Ausführung auf einem konventionellen PC oder auf einem mobilen Gerät wie einem Smartphone oder einem Tablet-Computer ausgestaltet sein, d.h. insbesondere für Microsoft Windows und/oder Android. Der Server kann auch ein Web-Site-Interface haben über das autorisierte Internetnutzer Bilder bzw. Portraitfotos auf den Server hochladen können.

Speicherung der Bilder bzw. Portraitfotos: Die Bilder bzw. Portraitfotos können in einer Datenbank gespeichert werden, welche über das Internet abgefragt werden kann. Es kann auch mehrere Datenbanken geben, zum Beispiel von verschiedenen Hörgeräteherstellern. Ein zentraler Server kann Anfragen an die verschiedenen Datenbanken weiterleiten, entweder gezielt oder in einem Broadcast-Modus. Bei Diensten, die über verschiedene Server verteilt sind spricht man auch von einer "Cloud". Die Speicherung auf einem Server erfolgt zusammen mit einer Person- oder Hörsystem-Kennung, mit welcher das Bild bzw. Portraitfoto wieder abgerufen werden kann. Die Portraitfotos können alternativ oder zusätzlich im mobilen Hörsystem gespeichert werden. Diese Variante hat den Vorteil, dass der Schalter nicht über eine Internetverbindung verfügen muss. Ferner ist eine Zwischenspeicherung (Caching) der Portraitfotos im audiovisuellen Beschallungssystem des Schalters möglich. Dies hat den Vorteil, dass ein einmal abgerufenes Portraitfoto nicht erneut vom Server abgerufen werden muss. Das System reagiert dadurch schneller und funktioniert zumindest zweitweise auch offline. Schliesslich können die Portraitfotos auch in der Patientendatenbank der Anpasssoftware gespeichert werden, welche typischerweise vom Akustiker betrieben wird.

Zusätzliche Daten: Gemeinsam mit den Portraitfotos können weitere Daten auf dem Server gespeichert werden bzw. an das audiovisuelle Beschallungssystem des Schalters übermittelt werden. Beispiele hierfür sind der Name und Geburtstag der Person, Stimmaufnahmen oder Hashwerte der Stimme sowie Hashwerte des Gesichtes.

Anzeige der Bilder bzw. Portraitfotos: Die Bilder bzw. Portraitfotos der Personen vor dem Schalter werden auf einem Bildschirm angezeigt. Die Bildanzeige kann lediglich den Rand des Bildschirmes einnehmen, so dass gleichzeitig noch andere Applikationen bedient werden können, zum Beispiel in Form eines Bandes. Es ist jedoch auch ein separater Bildschirm nur für die Bilder bzw. Portraitfotos möglich. Die Bilder bzw. Portraitfotos können geordnet sein, zum Beispiel nach Priorität bzw. Wahrscheinlichkeit, dass der Bedienstete mit der jeweiligen Person sprechen will. Hierfür kann der räumliche Abstand Kunde-Schalter und/oder der Zeitpunkt des Eintreffens der Person ermittelt werden. Eine andere Darstellungsvariante ist erweiterte Realität ("Augmented Reality"). Auf einem Bild der Situation vor dem Schalter werden Gesichter von Personen zum Beispiel mit einem Kreis markiert, welcher anzeigt, dass sich für diesen Personen eine Drahtlosaudioverbindung herstellen lässt. Optional können Regeln definiert werden, nach denen bestimmte Personen gar nicht erst angezeigt werden.

Anzeige von zusätzlicher Information: Bei der Anzeige der Bilder bzw. Portraitfotos kann zusätzliche Information dargestellt werden, wie zum Beispiel die Namen der Personen, die Sprache oder Sprachen der Personen, das Datum des letzten Besuches, zuletzt gekaufte Artikel, Namen und Portraitfotos von Angehörigen oder andere Texte und Icons. Die zusätzliche Information kann vom mobilen Hörsystem bzw. den Hörgeräten übertragen werden, im audiovisuellen System gespeichert sein oder von einer Datenbank bzw. einem Server abgerufen werden.

Anwahl der Bilder bzw. Portraitfotos: Die Anwahl erfolgt vorzugsweise durch Anklicken oder Berührung, wobei letzteres nur bei einem Touchscreen möglich ist. Die Abwahl kann ebenfalls durch Anklicken oder Berührung desselben oder einer anderen Person erfolgen. Optional kann auch mehr als eine Person gleichzeitig angewählt werden. Optional können auch Regeln definiert werden, nach denen bestimmte Personen automatisch angewählt werden. Insbesondere können Angehörige einer Person automatisch mit der Person angewählt werden. Die Anwahl eines Bilds bzw. Portraitfotos kann neben dem Aktivieren der Schallübertragung auch zur Folge haben, dass eine elektronische Akte der Person geöffnet wird.

Sicherheit: Die Person und/oder sein Akustiker hat vorzugsweise die Möglichkeit die Funktionalität mit dem Portraitfoto zu deaktivieren und wieder zu aktivieren, sowohl temporär, als auch permanent. Ferner kann die Funktionalität auch nur für vertraute Organisationen aktiviert werden, also zum Beispiel nur für Schalter des öffentlichen Verkehrs oder nur für eine bestimmte Bank. Hierbei kann eine Public-Key-Infrastruktur zum Einsatz kommen. Die öffentlichen Schlüssel oder Zertifikate der vertrauten Organisationen werden im mobilen Hörsystem gespeichert. Die vom mobilen System ans audiovisuelle System übermittelten Daten (die Kennung und/oder das Bild bzw. Portraitfoto) können mit dem öffentlichen Schlüssel des audiovisuellen Systems oder der zugehörigen Organisation verschlüsselt werden. Ferner werden das mobile Hörsystem und insbesondere die Hörgeräte mit einem privaten Schlüssel ausgestattet, so dass das audiovisuelle System die Zulässigkeit, Authentizität bzw. Echtheit des mobilen Systems prüfen kann. Das hierbei erforderliche Zertifikat kann im mobilen Hörsystem und/oder auf einem Server gespeichert sein. Die Anpasssoftware weist bevorzugt Mittel auf, welche es erlauben digitale Schlüssel und Zertifikat zu verwalten. Die vom audiovisuellen System ans mobile System übermittelten Schalldaten und/oder ein Sitzungsschlüssel für symmetrische Verschlüsselung können vom audiovisuellen System mit einem öffentlichen Schlüssel des mobilen Systems verschlüsselt werden, damit neben dem angewählten Personen auch mit technischen Hilfsmitteln niemand unbefugt "mithören" kann. Sämtlicher Datenaustausch zwischen mobilem, audiovisuellem und entferntem System kann geloggt und/oder analysiert werden, was es erlaubt nicht zulässige Aktionen bzw. Cyberangriffe zu erkennen.

Mobiles Hörsystem: Das mobile Hörsystem weist mindestens ein Hörgerät auf. Typischerweise umfasst es jedoch zwei Hörgeräte sowie ein Smartphone (oder einem anderem Smart-Device wie Tablet oder Media-Player), wobei die drei Geräte über Bluetooth oder WLAN, d.h. 2.4GHz, miteinander kommunizieren können. Für die Kommunikation zwischen den beiden Hörgeräten wird oft auch ein proprietäres induktives Funkverfahren verwendet, weil das Bluetooth Signal stark vom Kopf abgeschattet wird. Die Bilder bzw. Portraitfotos können sowohl in den Hörgeräten als auch im Smartphone gespeichert sein. Bei zwei Hörgeräten kann eines als Master fungieren und mit dem audiovisuellen System kommunizieren (Kennung senden, Schalldaten empfangen). Zur gleichmässigen Batteriebelastung kann es auch von Vorteil sein, wenn die Master-Rolle und die Slave-Rolle periodisch gewechselt werden. Bei manchen Hörgeräten ist für die Kommunikation mit dem Smartphone auch ein "Relay-Device", wie zum Beispiel ein Phonak iCOM, erforderlich, welches einen proprietären Funkstandard der Hörgeräte in einen öffentlichen Standard wie Bluetooth überführt.

Audiovisueller Computer: Das audiovisuelle Beschallungssystem umfasst vorzugsweise einen Personal-Computer mit Bluetooth-Dongle oder eingebauter Bluetooth-Funktion und mit einem Bildschirm. Beim Bildschirm kann es sich um einen Touchscreen handeln, was eine intuitive Anwahl der Bilder bzw. Portraitfotos erlaubt.

Kennung für Bilder bzw. Portraitfotos: Hierbei kann es sich um eine Bluetooth ID handeln, entweder von einem Hörgerät oder von einem Smartphone. Es ist aber auch eine andere universell eindeutige Nummer möglich, welche speziell dem Zweck der Portraitfotoidentifikation dient. Im Hinblick auf den Datenschutz weniger geeignet ist eine Kennung, welche Personendaten wie Name und Geburtstag enthält.

Drahtlossprachübertragung: Die Drahtlossprachübertagung vom audiovisuellen Beschallungssystem des Schalters ans mobile Hörsystem erfolgt bevorzugt über Bluetooth, insbesondere Bluetooth Low Energy. Der Computer des Schalters kann hierfür mit einem Bluetooth-Dongle ausgerüstet sein. Es sind jedoch auch andere Drahtlostechnologien möglich, zum Beispiel FM, WiFi, WLAN, GSM, UMTS, NFC, LTE, Induktionsschleife, Infrarot und Ultraschall, wobei auch diverse Kombinationen möglich sind. Bei einem binauralen Hörsystem sind verschieden Übertragungstechniken bzw. -konfigurationen möglich. Es können beide Hörgeräte direkt den Schall vom audiovisuellen System empfangen. Alternativ kann ein Hörgerät als Relaisstation oder Master funktionieren und den Schall ans zweite Hörgerät weiterleiten. Ferner kann auch ein Smartphone als Relaisstation funktionieren und den Schall an beide Hörgeräte insbesondere separat weiterleiten. Bei einer speziellen Lösung unterhält ein Gerät aktiv eine Bluetooth-Verbindung während ein zweites Gerät passiv mithört (Eavesdropping).

Automatisierung: Das System kann auch so gestaltet werden, dass es automatisch erkennt, mit welchem Personen der Bedienstete wahrscheinlich gerade sprechen will. Hierfür ist zusätzliche Sensorik von Vorteil.

Personenkamera: Es kann eine Kamera vorgesehen sein, welche den Bereich vor dem Schalter aufnimmt. Das von der Kamera bereitgestellte Bild kann für eine erweiterte Realität und ein automatisches Anwählen von Kommunikationspartnern verwendet werden.

Erweiterte Realität: Wie bereits erwähnt, kann das von der Personenkamera bereitgestellte Bild mit erweiterter Realität ("Augmented Reality") versehen werden. Gesichter können hervorgehoben bzw. Umrahmt werden. Die Gesichter können auch mittels Gesichtserkennung einer Person zugeordnet werden und mit einem Namen versehen werden.

Gesichtserkennung: Für die Gesichtserkennung kann auf die Bilder bzw. Portraitfotos von der Datenbank zurückgegriffen werden. Die Gesichtserkennung kann auf einem Server erfolgen, insbesondere auf demselben Server, welcher auch die Gesichtsdatenbank bereitstellt. Hierfür können komplette Bilder bzw. Portraitfotos übermittelt werden. Es kann jedoch auch ausreichen, Hashwerte des Gesichtes zu übermitteln. Auch ist es denkbar in der Datenbank nicht die ganzen Bilder bzw. Portraitfotos sondern nur die zugehörigen Hashwerte zu speichern, was den Datenschutz verbessert.

Personenmikrofon: Es kann ein Mikrofon vorgesehen sein, welches den Schall direkt vor dem Schalter aufnimmt. Dieser Schall kann einer Stimmerkennung zugeführt werden, welche analog zur Gesichtserkennung auf dem Server erfolgen kann. So lässt sich ermitteln, wer gerade vor dem Personenmikrofon steht bzw. spricht. Auf dem Server können hierfür Stimmproben und/oder Hashwerte davon gespeichert sein.

Automatische Personenanwahl: Mit der Personenkamera und Gesichtserkennung kann ermittelt werden, wo welche Person steht und bei welcher Person man aufgrund seiner Position davon ausgehen kann, dass sie gerade bedient werden soll. Das audiovisuelle System kann automatisch eine Verbindung zum mobilen System dieser Person aufbauen. Das Ganze geht analog auch mit dem Personenmikrofon und der Stimmerkennung.

Schallkorrelation: Eine alternative Variante der Drahtlosschallaktivierung funktioniert folgendermassen: Der Schall des Sprechers wird in einem Broadcast-Modus sämtlichen mobilen Hörsystemen im Wartebereich des Schalters zugeführt. Die jeweiligen Hörsysteme überprüfen daraufhin, ob eine Korrelation zwischen empfangenen Drahtlosschall und dem Signal der Hörgerätemikrofone besteht. Falls eine solche Korrelation mit einer vorbestimmten minimalen Stärke besteht, wird der Drahtlosschall über die Hörgerätehörer den schwerhörigen Personen zugeführt. Man kann so die Situation bzw. die Vertraulichkeit nachbilden, die man hätte, wenn der Hörgeräteträger nicht schwerhörig wäre.

Paarung / Verbindungsaufbau: Das mobile und das audiovisuelle System müssen sich gegenseitig "finden" (Pairing). Dies wird generell so gelöst, dass ein erstes System periodisch als Bake (Leuchtturm) funktioniert und das zweite System permanent nach Baken Ausschau hält (Screening). Das permanent Ausschau halten braucht mehr Strom. Es bietet sich daher an, dass das audiovisuelle System, welches praktisch unlimitiert Strom hat, Ausschau hält und das mobile System, welches nur limitiert Strom hat, periodisch ein Bakensignal abgibt. Man kann diese Rollen jedoch auch auswechseln. Ferner ist es möglich vorzusehen, dass die Bake erst dann Signale aussendet wenn ein anderes Kriterium erfüllt ist, zum Beispiel eine Benutzeraktion, die Detektion eines vom Schalter ausgestrahlten Broadcast Signals oder ein bestimmter Aufenthaltsort der Person, welcher mit zum Beispiel mit GPS ermittelt wird. Ferner ist es denkbar, dass die Paarungsbereitschaft des audiovisuellen Systems erst aktiviert wird, wenn ein Bewegungssensor Personen erkennt oder der Schalterbedienstete eine Benutzeraktion ausführt.

Lösung ohne Paarung: Bei einer bevorzugten Ausführungsform der Erfindung ist keine vollständige Bluetooth-Paarung erforderlich. Es reicht, wenn das mobile Hörsystem dem audiovisuelen System seine Bluetooth-ID mitteilt. Bei einer anderen Ausführungsform ist das Portraitbild im mobilen Hörsystem gespeichert. In diesem Fall kann das Portraitbild ohne Paarung ausgesendet werden, entweder periodisch oder unter bestimmten Bedingungen, wie einer Benutzeraktion oder einer Eigenstimmenerkennung des mobilen Hörsystems.

Ortsbestimmung: Für verschiedene Zwecke kann es von Vorteil sein, wenn das Gesamtsystem Ortseigenschaften der Personen ermittelt. Ein solcher Zweck ist die oben erwähnte Paarung, die erst durchgeführt wird, wenn sich die Person in der Umgebung des Schalters befindet. Ein anderer Zweck ist die Priorisierung der Personen basierend auf ihrer Nähe zum Schalter. Für die Ortsbestimmung sind verschiedene Techniken möglich, zum Beispiel: GPS, Auswertung der Signalstärke (RSSI, Received Signal Strength), Triangulation, Tiefenkamera (TOF/Microsoft Kinect), Ultraschalllaufzeit, Schalllaufzeit und Schalllautstärke am Ort der Person (der Stimme des Sprechers). Die Ortsbestimmung kann dabei vom audiovisuellen System, vom mobilen System oder durch ein Zusammenwirken beider System erfolgen.

Personen: Neben schwerhörigen Personen kann es selbstverständlich auch normalhörende Personen geben. Ist eine solche an der Reihe wird kein Drahtlosschall übertragen.

Schalter: Das Verfahren und das System kann in diversen Fällen eingesetzt werden, zum Beispiel bei Verkaufsstellen aller Art (POS-Point of Sale), bei Fahrkartenschaltern des öffentlichen Verkehrs, in Banken, bei Empfangsschaltern bzw. Rezeptionen in Hotels und dergleichen, bei Kiosken, Ausstellungs-, Messe- und Marktständen, in Apotheken und bei Ticketverkaufsstellen.

Sprecher bzw. Bedienstete: Je nach Art des Schalters gibt es andere Sprecher bzw. Bedienstete, zum Beispiel Schalterbeamte, Kundenberater, Verkäufer, Rezeptionisten, Apotheker etc.

Duplex Schall: Das Verfahren und das Systemen betreffen unter anderem die Übertragung von Schall des Sprechers zur Wahrnehmung durch schwerhörende Personen. Es ist jedoch auch eine Lösung denkbar, bei der auch die Gegenrichtung unterstützt wird. Der Sprachschall von Personen kann mit den Hörgerätemikrofonen aufgenommen werden und insbesondere via Bluetooth ans audiovisuelle System übertragen werden. Ein Lautsprecher im Schalter präsentiert den Schall zur Wahrnehmung durch den Sprecher.

Schwerhörige Sprecher bzw. Bedienstete: Auch der Sprecher bzw. Bedienstete kann schwerhörig sein. In diesem Fall ist eine Verbindung vom audiovisuellen System mit dem mobilen Hörsystem des Sprechers von Vorteil. Der Lautsprecher im Schalter kann durch eine direkte Drahtlosübertragung ans mobile Hörsystem des Sprechers ersetzt oder komplementiert werden.

Vorrichtungen für normalhörende Personen: Es kann sein, dass der Sprecher und die Personen mit einer Glasscheibe voneinander getrennt sind. In diesem Fall kann für eine oder auch beide Kommunikationsrichtungen ein Mikrofon / Verstärker / Lautsprecher - System vorgesehen sein. Teile dieses System, wie zum Beispiel das Sprecher-Mikrofon können von beiden Systemen (dem für normalhörende Personen und dem für schwerhörende Personen) benutz werden. Bei der Bedienung von schwerhörenden Personen können Teile des Systems für normalhörende Personen ausser Betrieb gesetzt werden, so zum Beispiel ein Lautsprecher, der die Sprache des Sprechers vor dem Schalter abgibt.

Rückkopplung: Bei der primären Ausführung der Erfindung wird Schall mit einem Sprecher-Mikrofon aufgenommen und über die Hörgerätehörer wieder abgegeben. Dabei sollte es nicht zu Rückkopplungen kommen. Gleichzeitig kann jedoch auch die Eigenstimme der Person verstärkt werden, damit diese seine Sprache kontrollieren kann. Hierbei können bekannte Massnahmen wie Verstärkungsbegrenzung und/oder Nachbildung des Rückkopplungspfades mit anschliessender Subtraktion zum Einsatz kommen. Bei einem "Duplex"-System kann eine Halb-Duplex-Variante stabiler sein.

Smartphone: Gemäss der vorliegenden Beschreibung kann ein Hörsystem neben den Hörgeräten ein Smartphone aufweisen. Der Begriff "Smartphone" ist hierbei exemplarisch zu verstehen. Anstelle des Smartphones kann auch ein anderer tragbarer Computer verwendet werden, wie zum Beispiel ein Tablet Computer (z.B. iPad), eine Smartwatch (e.g. iWatch), ein Notebook, ein e-Book Lesegerät oder ein Mediaplayer (e.g. iPod).

Obwohl die Ansprüche ein Verfahren bzw. ein System für dessen Durchführung betreffen, wird darauf hingewiesen, dass die Erfindung auch in Form eines oder mehrerer Computerprogrammprodukte beansprucht werden kann, welche Programmbefehle zur Ausführung der angegebenen Schritte umfassen und für die Ausführung basierend auf diversen Geräten bzw. Gerätekombinationen geeignet sind, wie zum Beispiel PCs, digitalen Hörgeräten, Telefonen, Smartphones, Fernbedienungen und Tablet-Computern.

Zusammenfassend wird ein Verfahren zur Beschallung von schwerhörigen Kunden (10, 20, 30) mit mobilen Hörsystemen (11, 21, 31) bei einer Verkaufs-, Beratungs- und/oder Amtsstelle mit einem Bediensteten (1) und mit einem stationären System (2, 3, 4), das stationäre System aufweisend einen Computer (2), einen Bildschirm (3) und ein stationäres Bediensteten-Mikrofon (4) vorgestellt.

## Patentansprüche

1. Ein Verfahren zur Beschallung von Personen (10, 20, 30) mit mobilen Hörsystemen (11, 21, 31) bei einer Besprechung mit einem Sprecher (1) und mit einem audiovisuellen System (2, 3, 4), das audiovisuelle System aufweisend einen Computer (2), einen Bildschirm (3) und ein Mikrofon (4), das Verfahren umfassend die Schritte:
A) Empfangen von ersten Daten von einem ersten mobilen Hörsystem (11), welches vom einer ersten Person (10) getragen wird, wobei die ersten Daten ein Bild (12) der ersten Person (10) referenzieren;
B) Empfangen von zweiten Daten von einem zweiten mobilen Hörsystem (21), welches vom einer zweiten Person (20) getragen wird, wobei die zweiten Daten ein Bild (22) der zweiten Person (20) referenzieren;
C) Darstellen des Bildes (12) der ersten Person (10) und des Bildes (22) der zweiten Person (20) auf dem Bildschirm (3) zur Wahrnehmung durch den Sprecher (1);
D) Auswahl einer Person (10, 20) durch den Sprecher (1) durch Anwählen eines der dargestellten Bilder (12, 22);
E) Generieren eines Sprachsignals durch Aufnahme einer Sprache des Sprechers (1) mit dem Mikrofon (4);
F) Drahtloses Übertragen des Sprachsignals an das mobiles Hörsystem (11, 21) der ausgewählten Person (10, 20);
G) Präsentation des Sprachsignals durch einen Lausprecher des mobilen Hörsystems (11, 21) zur Wahrnehmung durch die ausgewählte Person (10, 20);
wobei die ersten und die zweiten Daten jeweils eine Kennung enthalten, mit welcher das Bild (12) der ersten Person (10) bzw. das Bild (22) der zweiten Person (20)von einer Datenbank (45) abgerufen werden.

2. Das Verfahren zur Beschallung gemäss Anspruch 1,
wobei das Bild (12) der ersten Person (10) und das Bild (22) der zweiten Person (20) zusammen mit je einer Kennung in einer Datenbank (45) gespeichert werden, auf weiche über das Internet (40) zugegriffen wird.

3. Das Verfahren zur Beschallung gemäss Anspruch 1 oder 2,
wobei die ersten Daten und die zweiten Daten jeweils eine Bluetooth-Kennung enthalten.

4. Das Verfahren zur Beschallung gemäss einem der vorhergehenden Ansprüche,
wobei das Bild (12) der ersten Person (10) im ersten mobilen Hörsystem (11) gespeichert wird und das Bild (22) der zweiten Person (20) im zweiten mobilen Hörsystem (21) gespeichert wird.

5. Das Verfahren zur Beschallung gemäss einem der vorhergehenden Ansprüche,
wobei die drahtlose Übertragung des Sprachsignals gemäss eines Bluetooth-Protokolls erfolgt.

6. Das Verfahren zur Beschallung gemäss einem der vorhergehenden Ansprüche,
wobei das audiovisuelle System (2, 3, 4) ferner eine Kamera (6) aufweist;
wobei die Kamera (6) den Bereich vor dem Sprecher (1) aufnimmt und so ein Kamerabild generiert.

7. Das Verfahren zur Beschallung gemäss einem der vorhergehenden Ansprüche,
wobei ein Kamerabild dahingehend analysiert wird, welche Person (10, 20, 30) dem Sprecher (1) gegenüber steht, wobei eine Gesichtserkennung durchgeführt wird;
wobei das Bild (12) der ersten Person(10) und das Bild (22) der zweiten Person (20) hierzu verwendet werden.

8. Das Verfahren nach Anspruch 8,
wobei Hashwerte des Bildes (12) der ersten Person (10) und des Bildes (22) der zweiten Person (20) zum Vergleich mit dem Kamerabild verwendet werden.

9. Das Verfahren zur Beschallung gemäss einem der vorhergehenden Ansprüche,
wobei das audiovisuelle System (2, 3, 4) ferner ein Personen-Mikrofon (5) aufweist;
wobei das Personen-Mikrofon (5) Schall aus dem Bereich vor dem Sprecher (1) aufnimmt.

10. Ein computerlesbares Medium, in dem ein Computerprogramm gespeichert ist, das, wenn es auf einem Prozessor durchgeführt wird, dazu ausgeführt ist, das Verfahren gemäss einem der vorhergehenden Ansprüche durchzuführen.

11. Ein Beschallungssystem zur Durchführung des Verfahrens zur Beschallung gemäss einem der Ansprüche 1 bis 9, das Beschallungssystem umfassend:
• das audiovisuelle System (2, 3, 4);
• das erste mobile Hörsystem (11);
• das zweite mobile Hörsystem (21);
• Mittel zur Kommunikation zwischen dem audiovisuellen System (2, 3, 4) und den mobilen Hörsystemen (11, 21).

## Claims

1. A method for providing sound to persons (10, 20, 30) with mobile hearing systems (11, 21, 31) during a conversation with a speaker (1) and by means of an audiovisual system (2, 3, 4), the audiovisual system having a computer (2), a screen (3) and a microphone (4), the method comprising the steps of:
A) receiving first data from a first mobile hearing system (11) worn by a first person (10), the first data referencing an image (12) of the first person (10);
B) receiving second data from a second mobile hearing system (21) worn by a second person (20), the second data referencing an image (22) of the second person (20);
C) representing the image (12) of the first person (10) and the image (22) of the second person (20) on the screen (3) for perception by the speaker (1);
D) the speaker (1) selecting a person (10, 20) by calling one of the represented images (12, 22);
E) generating a speech signal by receiving speech of the speaker (1) by means of the microphone (4);
F) wirelessly transmitting the speech signal to the mobile hearing system (11, 21) of the selected person (10, 20);
G) a loudspeaker of the mobile hearing system (11, 21) presenting the speech signal for perception by the selected person (10, 20);
wherein the first and second data each include an identifier by means of which the image (12) of the first person (10) or the image (22) of the second person (20) is fetched from a database (45).

2. The method for providing sound according to claim 1,
wherein the image (12) of the first person (10) and the image (22) of the second person (20) are stored, each together with an identifier, in a database (45) which is accessed via the internet (40).

3. The method for providing sound according to either claim 1 or claim 2,
wherein the first data and the second data each include a Bluetooth identifier.

4. The method for providing sound according to any of the preceding claims,
wherein the image (12) of the first person (10) is stored in the first mobile hearing system (11) and the image (22) of the second person (20) is stored in the second mobile hearing system (21).

5. The method for providing sound according to any of the preceding claims,
wherein the wireless transmission of the speech signal takes place in accordance with a Bluetooth protocol.

6. The method for providing sound according to any of the preceding claims,
wherein the audiovisual system (2, 3, 4) further has a camera (6);
wherein the camera (6) captures the region in front of the speaker (1) and thus generates a camera image.

7. The method for providing sound according to any of the preceding claims,
wherein a camera image is analysed as to which person (10, 20, 30) is opposite the speaker (1), facial recognition being performed;
wherein the image (12) of the first person (10) and the image (22) of the second person (20) are used for this purpose.

8. The method according to claim 8,
wherein hash values of the image (12) of the first person (10) and the image (22) of the second person (20) are used for comparison with the camera image.

9. The method for providing sound according to any of the preceding claims,
wherein the audiovisual system (2, 3, 4) further has a personal microphone (5);
wherein the personal microphone (5) captures sound from the region in front of the speaker (1).

10. A computer-readable medium on which a computer program is stored which, when run on a processor, is configured to carry out the method according to any of the preceding claims.

11. A sound provision system for carrying out the method for providing sound according to any of claims 1 to 9, the sound provision system comprising:
• the audiovisual system (2, 3, 4);
• the first mobile hearing system (11);
• the second mobile hearing system (21);
• means for communication between the audiovisual system (2, 3, 4) and the mobile hearing systems (11, 21).

## Revendications

1. Un procédé de diffusion sonore auprès de personnes (10, 20, 30) équipées de systèmes d'écoute mobiles (11, 21, 31) lors d'une réunion impliquant un animateur (1) et un système audiovisuel (2, 3, 4), ledit système audiovisuel comportant un ordinateur (2), un écran (3) et un microphone (4), ledit procédé comprenant les étapes suivantes :
A) réception de premières données en provenance d'un premier système d'écoute mobile (11) porté par une première personne (10), les premières données se référant à une image (12) de la première personne (10) ;
B) réception de secondes données en provenance d'un second système d'écoute mobile (21) porté par une seconde personne (20), les secondes données se référant à une image (22) de la seconde personne (20) ;
C) représentation de l'image (12) de la première personne (10) et de l'image (22) de la seconde personne (20) sur l'écran afin que l'animateur (1) les perçoive ;
D) sélection d'une personne (10, 20) par l'animateur (1) en optant pour l'une des images (12, 22) représentées ;
E) génération d'un signal vocal en enregistrant des propos de l'animateur (1) à l'aide du microphone (4);
F) transmission sans fil dudit signal vocal au système d'écoute mobil (11, 21) de la personne (10, 20) sélectionnée ;
G) présentation du signal vocal par un haut-parleur du système d'écoute mobile (11, 21) afin que celui-ci soit perçu par la personne (10, 20) sélectionnée ;
chacune desdites premières et secondes données contenant un code permettant d'accéder à l'image (12) de la première personne (10) ou à l'image (22) de la seconde personne (20) se trouvant dans une base de données (45).

2. Le procédé de diffusion sonore selon la revendication 1, l'image (12) de la première personne (10) et l'image (22) de la seconde personne (20) étant stockées, chacune d'entre elles associée à un code, dans une base données (45) à laquelle on accède par internet (40).

3. Le procédé de diffusion sonore selon les revendications 1 ou 2,
chacune desdites premières données et secondes donnes contenant un code Bluetooth.

4. Le procédé de diffusion sonore selon l'une quelconque des revendications précédentes,
l'image (12) de la première personne (10) étant stockée dans le premier système d'écoute mobile (11) et l'image (22) de la seconde personne (20) étant stockée dans le second système d'écoute mobile (21).

5. Le procédé de diffusion sonore selon l'une quelconque des revendications précédentes,
la transmission sans fil du signal vocal étant réalisée selon un protocole Bluetooth.

6. Le procédé de diffusion sonore selon l'une quelconque des revendications précédentes,
le système audiovisuel (2, 3, 4) comportant en outre une caméra (6);
la caméra (6) enregistrant la zone devant l'animateur (1) pour ainsi générer une image de caméra.

7. Le procédé de diffusion sonore selon l'une quelconque des revendications précédentes,
comportant l'analyse d'une image de caméra en vue d'identifier la personne (10, 20, 30) se trouvant en face de l'animateur (1), en procédant à une reconnaissance faciale ;
l'image (12) de la première personne (10) et l'image (22) de la seconde personne (20) étant utilisées à cet effet.

8. Le procédé selon la revendication 8,
des valeurs de hachage de l'image (12) de la première personne (10) et de l'image (22) de la seconde personne (20) étant utilisées afin d'effectuer une comparaison avec ladite image de caméra.

9. Le procédé de diffusion sonore selon l'une quelconque des revendications précédentes,
le système audiovisuel (2, 3, 4) comportant en outre un microphone personnel (5) ;
le microphone personnel (5) enregistrant des sons présents dans la zone devant l'animateur (1).

10. Un média lisible par ordinateur dans lequel est stocké un logiciel qui est réalisé de manière à ce qu'il exécute le procédé selon l'une des revendications précédentes lorsqu'il est mis en œuvre sur un processeur.

11. Un système de diffusion sonore permettant de mettre en œuvre le procédé de diffusion sonore selon l'une des revendications 1 à 9, ledit système de diffusion sonore comprenant :
• le système audiovisuel (2, 3, 4) ;
• le premier système d'écoute mobile (11) ;
• le second système d'écoute mobile (21) ;
• des moyens de communication entre le système audiovisuel (2, 3, 4) et les systèmes d'écoute mobiles (11, 21).
